Europäisches Patentamt

European Patent Office

Office européen des brevets

(11) Numéro de publication : **0 427 597 B1**

(12) **FASCICULE DE BREVET EUROPEEN**

(45) Date de publication du fascicule du brevet :
**16.12.92 Bulletin 92/51**

(51) Int. Cl.⁵ : **F02M 59/46,** F16K 31/06

(21) Numéro de dépôt : **90403091.3**

(22) Date de dépôt : **31.10.90**

(54) **Electrovanne perfectionée en particulier pour pompe d'injection.**

(30) Priorité : **07.11.89 FR 8914594**

(43) Date de publication de la demande :
**15.05.91 Bulletin 91/20**

(45) Mention de la délivrance du brevet :
**16.12.92 Bulletin 92/51**

(84) Etats contractants désignés :
**DE GB IT**

(56) Documents cités :
**WO-A-88/06692**
**FR-A- 2 223 616**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Advenier, Pierre**
**35 rue Belliard**
**F-75018 Paris (FR)**
Inventeur : **Regneault, Marcel**
**75 rue Jean-Pierre Bourquard**
**F-78500 Sartrouville (FR)**

(74) Mandataire : **Durand, Yves Armand Louis et al**
**Cabinet Z. Weinstein 20, Avenue de Friedland**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a essentiellement pour objet une électrovanne, en particulier pour pompe d'injection dans les moteurs à combustion.

On a déjà proposé des électrovannes comprenant, d'une manière générale, un corps contenant une bobine qui, lorsqu'elle est excitée, commande le déplacement d'un noyau plongeur agissant sur un clapet susceptible d'obturer un orifice ménagé dans une pièce formant siège pour ledit clapet qui est solidaire d'un organe monté à coulissement guidé dans la pièce formant siège. (voir document FR-A-2 223 616)

Toutefois, ces électrovannes présentaient un certain nombre d'inconvénients, tels que par exemple l'usure se produisant à la longue au niveau du clapet d'où des défauts d'étanchéité à la fermeture de ce clapet.

Aussi, la présente invention a pour but de remédier notamment aux inconvénients ci-dessus en proposant une électrovanne perfectionnée qui est légère, dont le fonctionnement et le temps de réponse sont très rapides, dont la consommation en courant demeure modérée en raison de la légèreté des masses en mouvement, et surtout dont la longévité et l'étanchéité demeurent excellentes, même après un long usage.

A cet effet, l'invention a pour objet une électrovanne perfectionnée comprenant un corps contenant une bobine qui, lorsqu'elle est excitée, commande le déplacement d'un noyau plongeur agissant sur un clapet susceptible d'obturer un orifice ménagé dans une pièce formant siège pour ledit clapet qui est solidaire d'un organe monté à coulissement guidé dans la pièce formant siège, caractérisée en ce que l'organe et le clapet précités sont respectivement constitués par deux billes de diamètre différent.

Suivant une autre caractéristique de l'invention, la bille actionnée directement par le noyau plongeur possède un diamètre supérieur à celui de la bille formant clapet susceptible d'obturer l'orifice.

Selon encore une autre caractéristique de cette électrovanne, les billes précitées forment une pièce unique.

Mais d'autres caractéristiques et avantages de l'invention apparaîtront mieux dans la description détaillée qui suit et se réfère au dessin unique annexé, donné uniquement à titre d'exemple, et dans lequel :

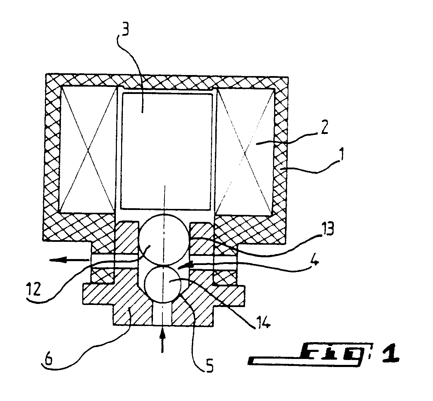

La figure 1 est une vue en coupe axiale d'un mode de réalisation d'électrovanne selon cette invention.

En se reportant à la figure 1, on voit qu'une électrovanne perfectionnée selon cette invention comprend essentiellement un corps 1 contenant une bobine 2 qui peut être alimentée en courant pour commander le déplacement d'un noyau plongeur 3 agissant sur une pièce unique 4 dissociée du noyau plongeur 3 et formant entre autres un clapet susceptible d'obturer un orifice 5 ménagé dans une pièce 6 solidaire du corps 1 et formant siège pour ledit clapet.

La pièce unique 4 formant clapet se compose de deux billes de diamètre différent qui sont solidaires l'une de l'autre par tout moyen approprié tel que par exemple soudage ou collage.

Plus précisément, la pièce unique 4 comporte une bille supérieure 12 étroitement maintenue et guidée dans un alésage 13 de la pièce formant siège 6. Cette bille 12 est d'un diamètre supérieur à la deuxième bille ou bille inférieure 14 qui forme le clapet proprement dit susceptible d'obturer l'orifice 5. L'ensemble des deux billes 12, 14 est dissocié du noyau plongeur 9 qui peut actionner directement la pièce unique 4 en prenant appui sur la bille supérieure 12.

On a donc réalisé suivant l'invention un mode de réalisation d'une électrovanne comportant une pièce unique dissociée du noyau plongeur et formant un clapet monté à coulissement et positivement guidé dans une pièce formant siège pour ledit clapet, de sorte que ladite électrovanne présente non seulement un encombrement réduit et n'exige que peu de courant pour son fonctionnement, mais présente des qualités de fiabilité de fonctionnement et de longévité nettement accrues par rapport aux électrovannes de l'art antérieur.

Bien entendu, l'invention n'est nullement limitée aux modes de réalisation décrits et illustrés, qui n'ont été donnés qu'à titre d'exemple.

## Revendications

1. Electrovanne comprenant un corps (1) contenant une bobine (2) qui, lorsqu'elle est excitée, commande le déplacement d'un noyau plongeur (3) agissant sur un clapet susceptible d'obturer un orifice (5) ménagé dans une pièce (6) formant siège pour ledit clapet qui est solidaire d'un organe monté à coulissement guidé dans la pièce formant siège (6), caractérisée en ce que l'organe et le clapet précités sont respectivement constitués par deux billes (12, 14) de diamètre différent.

2. Electrovanne selon la revendication 1, caractérisée en ce que la bille (12) actionnée directement par le noyau plongeur (3) possède un diamètre supérieur à celui de la bille (14) formant clapet susceptible d'obturer l'orifice (5).

3. Electrovanne selon la revendication 1 ou 2, caractérisée en ce que les billes précitées (12, 14) forment une pièce unique (4).

**Patentansprüche**

1.  Magnetventil mit einem eine Spule (2) enthaltenden Körper (1), die, wenn sie erregt wird, die Verschiebung eines auf ein Ventilglied einwirkenden Tauchkernes (3) steuert, welches fähig ist, eine in einem einen Sitz für das besagte Ventilglied bildenden Stück (6) gebildete Oeffnung (5) zu verschliessen, welches Ventilglied mit einem in dem einen Sitz bildenden Stück (6) gleitbar geführt angeordneten Glied fest verbunden ist, dadurch gekennzeichnet, dass das vorgenannte Glied und Ventilglied jeweils durch zwei Kugeln (12, 14) unterschiedlichen Durchmessers gebildet sind.

2.  Magnetventil nach Anspruch 1, dadurch gekennzeichnet, dass die unmittelbar durch den Tauchkern (3) betätigte Kugel (12) einen Durchmesser, der grösser ist als derjenige der das zum Schliessen der Oeffnung (5) fähige Ventilglied bildenden Kugel (14) hat.

3.  Magnetventil nach Anspruch 1 oder 2, dadurch gekennzeichnet, dass die vorgenannten Kugel (12, 14) ein einziges Stück (4) bilden.

**Claims**

1.  Electrovalve comprising a body (1) containing a coil (2) which when it is energized operates the displacement of a plunger core (3) acting upon a valve element adapted to close an opening (5) formed in a part (6) forming a seat for the said valve element which is made fast to a member mounted for guided sliding in the seat-like part (6), characterized in that the aforesaid member and valve element consist of two balls (12, 14) of different diameters, respectively.

2.  Electrovalve according to claim 1, characterized in that the ball (12) directly actuated by the plunger core (3) has a diameter greater than that of the ball (14) forming the valve element adapted to close the opening (5).

3.  Electrovalve according to claim 1 or 2, characterized in that the aforesaid balls (12, 14) form a single part (4).

FIG 1